# EUROPÄISCHE PATENTANMELDUNG

(11) **EP 2 527 187 A2**
(43) Veröffentlichungstag der Anmeldung: **28.11.2012**
(21) Anmeldenummer: 12160276.7
(22) Anmeldetag: 20.03.2012
(51) Int. Cl.: B60L 11/18

(54) **Elektrisches Ladesystem**

(30) Priorität: 27.05.2011 DE 102011076599
(71) Anmelder: ZF Friedrichshafen AG, 88038 Friedrichshafen (DE)
(72) Erfinder: Januschevski, Robert, 88069 Tettnang (DE); Kett, Jürgen, 88045 Friedrichshafen (DE)

(57) **Zusammenfassung**

Elektrisches Ladesystem (1) für einen Energiespeicher (2) eines Kraftfahrzeugs, wobei das Ladesystem (1) einen Versorgungseingang (4, 4') in einem Leitersystem mit wenigstens einem Phasen- (4a) und einem Nullleiter (4b) für die Energieversorgung aus einem Netz aufweist, wobei das Ladesystem (1) ferner eine Drehfeldmaschine (6) aufweist, welche über ihre Strangwicklungen (u, v, w) durch denselben betreibbar mit einem Wechselrichter (3) verbunden ist, wobei der Wechselrichter (3) andererseits zur Verbindung mit dem zu ladenden Energiespeicher (2) vorgesehen ist, wobei die Strangwicklungen (u, v, w) der Drehfeldmaschine (6) elektrisch selektiv vereinzel- und zusammenführbar sind, wobei das Ladesystem (1) zu einem Hochsetzsteller-Ladebetrieb und einem Tiefsetzsteller-Ladebetrieb mittels wenigstens einer vereinzelten Strangwicklung (u, v, w), insbesondere sämtlicher vereinzelter Strangwicklungen (u, v, w), ausgebildet ist.

## Beschreibung

Die vorliegende Erfindung betrifft ein elektrisches Ladesystem gemäß dem Oberbegriff von Anspruch 1.

Zum Laden von Energiespeichern in Kraftfahrzeugen, z.B. in Form von Traktionsbatterien, welche z.B. in Hybrid- oder Elektrofahrzeugen aufgenommen sind, verwendet man neben externen Ladegeräten auch On-Board-Ladegeräte, welche vorteilhaft von der bordeigenen Infrastruktur des elektrischen Antriebsstrangs Gebrauch machen.

Die Druckschrift DE 693 03 150 T2 offenbart ein System, bei welchem eine selektiv anschaltbare Netzspannungsquelle über eine Drehfeldmaschine und einen Wechselrichter einen Energiespeicher lädt. Die Druckschrift EP 0 834 977 A2 offenbart daneben eine Ladeeinrichtung, bei welcher die Induktivitäten der Elektromaschine vorteilhaft zur Bildung eines Hochsetzstellers zur Einstellung der Ladespannung genutzt werden können.

Ausgehend hiervon ist es Aufgabe der vorliegenden Erfindung, ein Ladesystem vorzuschlagen, welches unter Beibehaltung der Vorteile aus dem Stand der Technik weitergehende Laderegelmöglichkeiten mit geringem Aufwand bereitstellt.

Diese Aufgabe wird durch ein Ladesystem mit den Merkmalen von Anspruch 1 gelöst. Vorteilhafte Ausführungsformen und Weiterbildungen sind Gegenstand der Unteransprüche.

Vorgeschlagen wird erfindungsgemäß ein elektrisches Ladesystem für einen Energiespeicher eines Kraftfahrzeugs. Das Ladesystem ist hierbei insbesondere als On-Board-Ladesystem ausgebildet, welches mittels einer fahrzeugeigenen Elektro-Antriebs-Infrastruktur z.B. eines hybridisierten-Kraftfahrzeugs oder eines Elektrofahrzeugs realisiert werden kann.

Das Ladesystem weist einen Versorgungseingang in einem Leitersystem mit wenigstens einem Phasen- und einem Null- bzw. Neutralleiter für die Energieversorgung aus einem Netz auf, wobei der Nullleiter bevorzugt geerdet ist. Der Versorgungseingang kann ein Drehstromeingang in einem Vierleitersystem mit einem Nullleiter und drei Phasenleitern sein. Der Versorgungseingang kann auch ein Wechselstromeingang sein, z.B. Bestandteil eines einphasigen Systems mit einem Phasenleiter und einem Nullleiter.

Als aktiver Phasenleiter des Versorgungseingangs ist im Rahmen der vorliegenden Erfindung hierbei ein Phasenleiter bezeichnet, über welchen augenblicklich aus einem Netz entnommene Energie transportiert wird.

Im Rahmen der vorliegenden Erfindung ist bei einer bevorzugten Ausführungsform vorgesehen, das Ladesystem mit einem ersten und einem zweiten Versorgungseingang auszubilden, wobei zwischen dem ersten und dem zweiten Versorgungseingang umgeschaltet werden kann, d.h. der Versorgungseingang wird selektiv entweder durch den ersten oder den zweiten Versorgungseingang gebildet. Der erste Versorgungseingang weist hierbei eine erste Anzahl von Phasenleitern auf, der zweite Versorgungseingang eine zweite, von der ersten Anzahl verschiedene Anzahl von Phasenleitern. Der erste Versorgungseingang ist insbesondere ein Drehstromeingang mit drei Phasenleitern, der zweite Versorgungseingang ein Wechselstromeingang mit einem Phasenleiter. Derart können z.B. sowohl Wechsel- als auch Drehstromquellen zur Energieversorgung an das Ladesystem angeschaltet werden, z.B. solche mit 230V und auch 400V.

Ein Versorgungseingang des Ladesystems ist bevorzugt je mittels einer Anschlussvorrichtung in Form einer Steckverbindungsvorrichtung gebildet, welche z.B. als Stecker oder als Buchse ausgeführt sein kann.

Das Ladesystem ist bevorzugt derart ausgebildet, dass sämtliche Phasenleiter eines jeweiligen Versorgungseingangs als aktive Phasenleiter zur Energiezufuhr genutzt werden können, i.e. korrespondierend mit jenem von mehreren anschaltbaren Leitersystemen ausgelegt, welches die meisten Phasenleiter aufweist. Bevorzugt ist das Ladesystem im Rahmen der vorliegenden Erfindung mehrphasig, insbesondere dreiphasig, gebildet, um einen mehrphasigen Ladebetrieb unter Verwendung von z.B. Drehstrom zu ermöglichen. Ein solches Ladesystem kann bei einer bevorzugten Ausführungsform auf einfache Weise vorteilhaft auch für einen einphasigen Ladebetrieb unter Verwendung von Wechselstrom genutzt werden.

Das Ladesystem weist im Rahmen der vorliegenden Erfindung eine Drehfeldmaschine auf, welche über ihre Strangwicklungen mit einem Antriebs-Wechselrichter des Ladesystems verbunden ist, i.e. elektrisch. Ein Betrieb der Drehfeldmaschine, insbesondere zu Antriebszwecken, kann hierbei mittels des Wechselrichters erfolgen, z.B. durch geeignete Taktung der Schalter desselben. Der Wechselrichter ist auf bekannte Weise mittels einer Brückenschaltung ausgebildet, die Drehfeldmaschine vorzugsweise in Sternschaltung ausgeführt und in Bezug auf den Wechselrichter wechselspannungsseitig an diesem angeordnet. Eine Steuerung steuert den Betrieb des Wechselrichters über eine Treiberstufe desselben.

Der Wechselrichter ist andererseits, i.e. gleichspannungsseitig, mit einem über das Ladesystem zu ladenden Energiespeicher verbindbar, i.e. elektrisch, vorzugsweise über einen Zwischenkreiskondensator des Wechselrichters. Ein Energiespeicher kann hierbei eine aus einer oder mehreren Zellen zusammengesetzte Batterie bzw. ein Akkumulator, ein Hochleistungskondensator oder ein weiterer zu Antriebszwecken geeigneter ladbarer Energiespeicher sein.

Die Strangwicklungen der Drehfeldmaschine sind im Rahmen der vorliegenden Erfindung elektrisch selektiv vereinzel- und zusammenführbar, d.h. die elektrische Verschaltung der Strangwicklungen untereinander - korrespondierend mit z.B. der Sternschaltung - ist auflösbar und wiederherstellbar. Bei Vereinzelung ergeben sich diskrete Strompfade über je einen Wicklungsstrang der Drehfeldmaschine durch diese hindurch, bei Zusammenführung ist die ursprüngliche, Antriebszwecken dienende Verschaltung wiederhergestellt. Die Wicklungsstränge der Drehfeldmaschine sind hierbei vorzugsweise über Schalter selektiv vereinzel- und zusammenführbar, welche z.B. als Trennschalter ausgeführt sind (nachfolgend als zweite Schalter bezeichnet).

Wenigstens einer der Phasenleiter des Versorgungseinganges, über welchen bei Anbindung an ein Versorgungsnetz via der Anschlussvorrichtung Energie transportiert werden kann, ist im Rahmen der vorliegenden Erfindung über einen Schalter bzw. einen von ersten Schaltern sowie eine in Sperrrichtung geschaltete Diode mit dem Nullleiter des Versorgungseinganges verbunden. Ein derartiger erster Schalter ist vorzugsweise ein steuerbarer, transistorisierter Schalter, welcher getaktet betreibbar ist, z.B. ein IGBT oder ein MOSFET. Hierbei führt die elektrische Verbindung des wenigstens einen Phasenleiters mit dem Nullleiter jeweils über die Schaltstrecke des Schalters, z.B. Drain-Source. Die jeweilige Diode in der Strecke zwischen Phasenleiter und Nullleiter des Versorgungseinganges ist für einen Freilaufbetrieb vorgesehen, wie nachfolgend noch näher erläutert wird, und mit dem Schalter bzw. dessen Schaltstrecke in Serienschaltung angeordnet.

Hierbei ist eine elektrisch vereinzelte Strangwicklung, i.e. der Drehfeldmaschine, über einen Abgriff zwischen diesem ersten Schalter und dieser Diode mittels desselben Schalters selektiv mit dem Phasenleiter des Versorgungseinganges verbindbar, i.e. elektrisch. Hierbei ist der Wechselrichter andererseits mit dem Nullleiter elektrisch verbunden. Die Verbindung zwischen einem Phasen- und dem Nullleiter kann insbesondere mittels eines Verbindungsleiters ausgebildet sein, welcher sich von dem Phasenleiter hin zum Nullleiter erstreckt. Durch diese vorteilhaft mit geringem Aufwand zu realisierende Anordnung wird ein Ladesystem mit zumindest einphasigen, umfassenden Laderegelungsmöglichkeiten für einen Ladebetrieb mit z.B. eingangsseitig zugeführtem Wechselstrom bereitgestellt.

Bei einer besonders bevorzugten Ausführungsform sind mehrere, insbesondere je sämtliche Phasenleiter eines jeweiligen, insbesondere anschaltbaren Versorgungseinganges über je einen ersten Schalter sowie je eine in Sperrrichtung geschaltete Diode mit dem Nullleiter des Versorgungseinganges verbindbar. Hierzu weist das Ladesystem bevorzugt eine Anzahl von ersten Schaltern, Dioden und Verbindungsleitungen auf, welche mit der größten Anzahl von Phasenleitern unter jeweiligen Versorgungseingängen korrespondiert, d.h. jeweils drei im Fall von Drehstrom als Versorgungseingang mit der höchsten Phasenleiterzahl. Bei dieser bevorzugten Ausführungsform sind mehrere, insbesondere sämtliche elektrisch vereinzelte Strangwicklungen, insbesondere drei, über je einen Abgriff zwischen einem ersten Schalter und einer Diode mittels des jeweiligen Schalters selektiv mit je einem Phasenleiter verbindbar. Durch diese vorteilhaft mit geringem Aufwand zu realisierende Anordnung wird ein Kraftfahrzeug-Ladesystem mit umfassenden, insbesondere mehrphasigen Laderegelungsmöglichkeiten für einen Ladebetrieb bereitgestellt. Insbesondere ist hierbei ein dreiphasiger Ladebetrieb realisierbar.

Bei einer bevorzugten Ausführungsform der Erfindung ist vorgesehen, dass mittels einer vereinzelten Strangwicklung der Drehfeldmaschine, wenigstens einem ersten Schalter sowie wenigstens einer Diode ein in Richtung zum Energiespeicher wirkender Tiefsetzsteller gebildet ist. Ein solcher kann als zumindest einphasiger Tiefsetzsteller, z.B. in Zusammenhang mit einer Wechselstromspeisung mittels des Versorgungseinganges, arbeiten. Zur Bildung des Tiefsetzstellers wird vorteilhaft die Stranginduktivität der vereinzelten Strangwicklung genutzt.

Insbesondere ist hierbei auch vorgesehen, mittels des Ladesystems unter Nutzung mehrerer, insbesondere sämtlicher vereinzelter Strangwicklungen der Drehfeldmaschine, sowie unter Nutzung mehrerer erster Schalter sowie mehrerer Dioden, einen in Richtung zum Energiespeicher wirkenden mehrphasigen Tiefsetzsteller zu bilden. Ein solcher kann z.B. im Zusammenhang mit einem Vierleitersystem-Versorgungseingang als dreiphasiger Tiefsetzsteller arbeiten. Zur Bildung des Tiefsetzstellers wird vorteilhaft die jeweilige Stranginduktivität einer vereinzelten Strangwicklung zur Energiezwischenspeicherung im Sinne des Tiefsetzstellerprinzips genutzt.

Das Ladesystem ist im Rahmen der vorliegenden Erfindung insbesondere auch dazu ausgebildet, mittels wenigstens einer vereinzelten Strangwicklung der Drehfeldmaschine, einem ersten Schalter und dem Wechselrichter einen in Richtung zum Energiespeicher wirkenden Hochsetzsteller zu bilden. Der derart gebildete Hochsetzsteller wird z.B. in Zusammenhang mit einem Leitersystem mit einem Phasenleiter genutzt. Ein den aktiven Phasenleiter mit der vereinzelten Strangwicklung über einen zugehörigen Abgriff verbindender erster Schalter ist zur Bildung des Hochsetzstellers hierbei geschlossen bzw. leitend.

Mittels mehrerer vereinzelter Strangwicklungen der Drehfeldmaschine, insbesondere sämtlicher Strangwicklungen, mehrerer erster Schalter und dem Wechselrichter bildet das Ladesystem bei einer bevorzugten Ausführungsform einen in Richtung zum Energiespeicher wirkenden mehrphasigen Hochsetzsteller. Eine Induktivität einer vereinzelten Strangwicklung kann hierbei vorteilhaft zur Spannungsüberhöhung im Sinne des Hochsetzstellerprinzips genutzt werden. Hierbei ist der Versorgungseingang z.B. ein Drehstromeingang bzw. ein Mehrleitereingang. Zur Bildung des Hochsetzstellers sind die ersten, jeweils über einen Abgriff mit einer vereinzelten Strangwicklung verbundenen Schalter vorzugsweise geschlossen.

Wie vorstehend ausgeführt, wird im Rahmen der vorliegenden Erfindung ein vorteilhaft einfach zu realisierendes Ladesystem für ein Kraftfahrzeug bereitgestellt, welches zu einem Hochsetzsteller-Ladebetrieb und auch einem Tiefsetzsteller-Ladebetrieb mittels wenigstens einer vereinzelten Strangwicklung, insbesondere sämtlicher vereinzelter Strangwicklungen, ausgebildet ist.

Bei einem erfindungsgemäßen Verfahren zum Betrieb des Ladesystems ist eine erste bzw. Tiefsetzstellerbetriebsart vorgesehen. Hierbei wirkt das Ladesystem in Richtung zum Energiespeicher als Tiefsetzsteller. Für den Tiefsetzstellerbetrieb kann ein an einem aktiven Phasenleiter angeordneter erster Schalter getaktet betrieben werden, vorzugsweise sämtliche an aktiven Phasenleitern angeordnete erste Schalter, wobei die mit dem jeweiligen Schalter über den zugehörigen Abgriff verbundene Strangwicklung jeweils elektrisch vereinzelt ist und wobei der Wechselrichter in einem Durchschleifbetrieb arbeitet, d.h. der Ladestrom wird durch den Wechselrichter zum Energiespeicher durchgeschleift.

Vorgeschlagen wird bei dem Verfahren zum Betrieb eines Ladesystems auch, dieses in einer zweiten bzw. Hochsetzstellerbetriebsart zu betreiben. In der Hochsetzstellerbetriebsart wirkt das Ladesystem in Richtung zum Energiespeicher als Hochsetzsteller. Hierzu kann ein an einem aktiven Phasenleiter angeordneter erster Schalter für eine Dauer geschlossen werden, insbesondere sämtliche an aktiven Phasenleitern angeordnete erste Schalter, wobei die mit dem jeweiligen Schalter über den zugehörigen Abgriff verbundene Strangwicklung jeweils elektrisch vereinzelt ist und wobei der Wechselrichter getaktet betrieben wird.

Bei einem Verfahren zum Betrieb eines Ladesystems wird das Ladesystem in einer dritten bzw. einer weiteren Ladebetriebsart betrieben. Hierbei arbeitet das Ladesystem ebenfalls im Ladebetrieb, wobei wenigstens ein an einem aktiven Phasenleiter angeordneter erster Schalter getaktet betrieben wird, insbesondere sämtliche, und wobei die mit dem Schalter über den zugehörigen Abgriff verbundene Strangwicklung jeweils elektrisch vereinzelt ist und der Wechselrichter getaktet betrieben wird. Mittels dieser Betriebsart lässt sich eine Laderegelung auch erzielen, wenn die Versorgungsspannung mit der Spannung am Energiespeicher korrespondiert, z.B. annähernd identisch ist. Hierbei kann das Ladesystem einerseits als Hochsetz- und andererseits gleichzeitig als Tiefsetzsteller wirken. Bei dieser dritten Betriebsart ist vorgesehen, die ersten Schalter mit einer Frequenz zu takten, welche der Frequenz der Taktung des Wechselrichters entspricht.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Beispielhafte Ausführungsformen der Erfindung werden nachfolgend anhand der beigefügten Zeichnungen näher erläutert. Es zeigen:
Fig. 1 exemplarisch ein elektrisches Ladesystem gemäß einer möglichen Ausführungsform der Erfindung; und
Fig. 2 exemplarisch zwei Versorgungseingänge des Ladesystems, zwischen welchen dieses gemäß einer weiteren möglichen Ausführungsform der Erfindung umschaltbar ist.

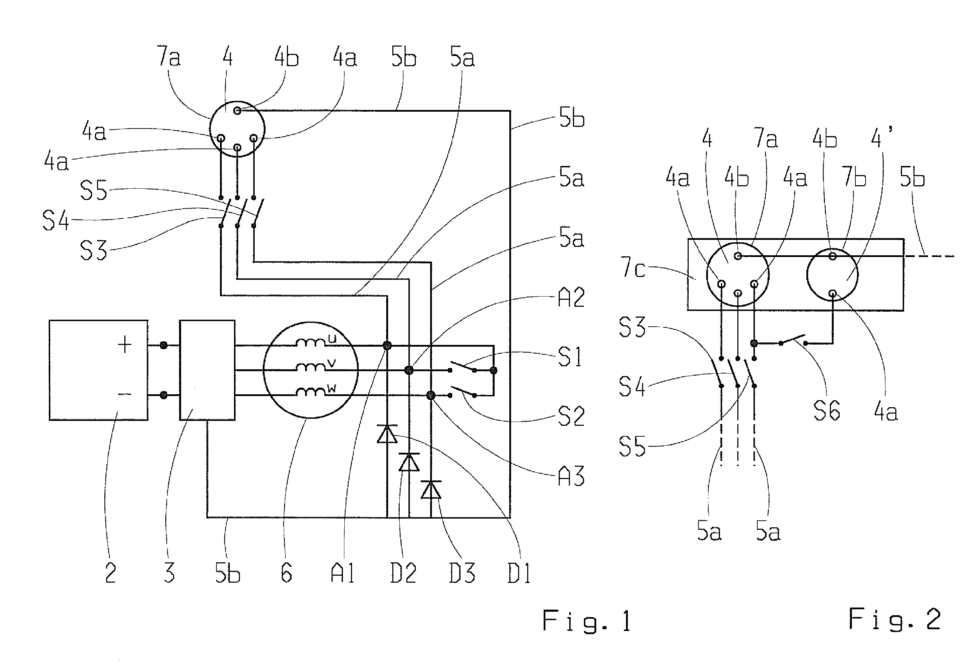

Fig. 1 zeigt exemplarisch ein elektrisches Ladesystem 1 zum Laden eines elektrischen Energiespeichers 2 in Form einer Traktionsbatterie, welcher über einen Wechselrichter 3 des Ladesystems 1 aufladbar ist. Der Energiespeicher 2 ist gleichspannungsseitig mit dem Wechselrichter 3 verbunden, insbesondere z.B. über einen Zwischenkreiskondensator. Das Ladesystem 1 ist als On-Board-Ladesystem eines Kraftfahrzeugs gebildet.

Das Ladesystem 1 weist einen Versorgungseingang 4 zur Energieaufnahme aus einem externen Drehstrom-Energieversorgungsnetz auf. Der Versorgungseingang 4 weist hierbei drei Phasenleiter 4a und einen Nullleiter 4b bzw. Neutralleiter auf. Der Wechselrichter 3 ist mit dem Nullleiter 4b elektrisch verbunden, hier über die Leitung 5b, so dass dem Wechselrichter 3 ein Bezugspotential zur Verfügung steht.

Die drei Phasenleiter 4a des Versorgungseinganges 4 sind jeweils via eines ersten Schalters S3, S4, S5 des Ladesystems 1 sowie je einer in Sperrrichtung geschalteten Diode D1, D2, D3 mit dem Nullleiter 4b desselben elektrisch verbunden. Die Schaltstrecke je eines ersten Schalters S3, S4, S5 ist hierbei mit je einer in Sperrrichtung angeordneten Diode D1 bzw. D2 bzw. D3 in je einer Serienschaltung angeordnet, deren elektrischer Eingang je von einem Phasenleiter 4a gebildet wird und deren elektrischer Ausgang von dem Nullleiter 4b, i.e. über die Potentialleitung 5b.

Eine solche Verbindung, insbesondere sämtliche, welche mittels jeweils eines Verbindungsleiters 5a realisiert ist und jeweils über die Schaltstrecke eines ersten Schalters S3, S4, S5 führt, weist hierbei jeweils einen Abgriff A1, A2, A3 zwischen dem jeweiligen Schalter S3, S4, S5 und der jeweiligen Diode D1 bzw. D2 bzw. D3 auf. Zur Verbindung der Verbindungsleiterenden 5a mit dem Nullleiter 4b wird - wie bereits angedeutet - weiterhin die Potentialleitung 5b ausgehend vom Nullleiter 4b genutzt, an welcher auch der Wechselrichter 3 ankontaktiert ist.

Wechselspannungsseitig ist der Wechselrichter 3 mittels deren Wicklungssträngen mit einer Drehfeldmaschine 6 des Ladesystems 1 verbunden, wobei die Wicklungsstränge u, v, w zu Antriebszwecken im Stern geschaltet sind. Die Wicklungsstränge u, v, w sind mittels zweiter Schalter S1, S2 des Ladesystems 1 vereinzelbar und zusammenführbar, insbesondere elektrisch. Bei Öffnen der zweiten Schalter S1, S2 wird die Sternverschaltung der Wicklungsstränge u, v, w aufgetrennt, bei Schließen wieder zusammengeführt. Mittels eines Abgriffs A1 bzw. A2 oder A3 ist ein vereinzelter Wicklungsstrang u, v, w hierbei selektiv, i.e. in Abhängigkeit der Schaltstellung des zugehörigen bzw. damit elektrisch gekoppelten ersten Schalters S3, S4, S5 mit einem Phasenleiter 4a des Versorgungseinganges 4 elektrisch verbindbar.

Das Ladesystem 1 ist dazu ausgebildet, im Ladebetrieb die Ladespannung für den zu ladenden Energiespeicher 2 geeignet einstellen zu können. Auf vorteilhafte Weise kann das Ladesystem 1 hierbei als Hochsetz- und/oder Tiefsetzsteller wirken, i.e. in Richtung zu dem zu ladenden Energiespeicher 2.

Für einen Tiefsetzstellerbetrieb - entsprechend einer Spannungsherabsetzung in Richtung zu einem zu ladenden Energiespeicher 2 - werden die zweiten Schalter S1, S2 geöffnet, die Strangwicklungen u, v, w insofern vereinzelt. Die Drehfeldmaschine 6 - insbesondere in Form einer Asychronmaschine - ist hierbei außer Betrieb. Seitens des Versorgungseinganges 4 über die aktiven Phasenleiter 4a und den Nullleiter 4b bereitgestellte Energie kann bei Schließen der entsprechenden ersten Schalter S3, S4, S5 an dem jeweiligen Abgriff A1, A2, A3 für eine vereinzelte Strangwicklung u bzw. v bzw. w bereitgestellt werden, wobei mittels der jeweiligen Stranginduktivitäten Energie in denselben zwischengespeichert wird. Ein vorgesehener Ladestrom für den Energiespeicher 2 kann über je eine mit einem Abgriff A1, A2, A3 verbundene Strangwicklung u, v, w durch den Wechselrichter 3 zum Energiespeicher gelangen, wobei dieser im Durchschleifbetrieb arbeitet.

Zur Einstellung des Ladespannungsniveaus wird der jeweilige, mit dem Abgriff A1 bzw. A2, A3 über seine Schaltstrecke verbundene Schalter S3, S4, S5 getaktet betrieben, i.e. durch Ansteuerung des jeweiligen Steuereingangs desselben. Bei Öffnen des Schalters S3, S4, S5 kann eine vereinzelte Stranginduktivität einer Strangwicklung u, v, w den Strom über die jeweilige Diode D1, D2, D3 und den mit diesem verbundenen Wechselrichter über die Last sowie den Nullleiter weiter treiben bzw. der Strom zirkulieren, d.h. das Ladesystem 1 wirkt im Ladebetrieb als Tiefsetzsteller. Zur Bildung eines dreiphasigen Tiefsetzstellers, vgl. Fig. 1, sind die drei Phasenleiter 4a des mehrphasigen Leitersystems über je einen entsprechenden Abgriff A1, A2, A3 zwischen einem ersten Schalter S3, S4, S5 und einer Diode D1, D2, D3 mit einer vereinzelten Strangwicklung u, v, w zu verbinden und sämtliche erste Schalter S3, S4, S5 gesteuert bzw. getaktet zu betreiben.

Für ein Hochstellen der Ladespannung, beispielsweise bei einem niedrigen Versorgungsspannungsniveau ausgehend vom Versorgungsnetz, z.B. bei Entnahme von Energie aus einem Wechselspannungsnetz, ist mittels des Ladesystems 1 ein Hochsetzsteller bildbar. Hierbei sind die Strangwicklungen u, v, w mittels der zweiten Schalter S1, S2 wiederum vereinzelt. Der Wechselrichter 3 wird getaktet betrieben, wobei wenigstens ein mit einem aktiven Phasenleiter verbundener Schalter S3, S4, S5 dauerhaft geschlossen ist. Je eine über einen Abgriff A1, A2, A3 mit dem Versorgungseingang 4 verbundene, vereinzelte Strangwicklung u, v, w stellt eine Induktivität zur Spannungsüberhöhung bzw. zur Bildung des Hochsetzstellers bereit.

Fig. 2 zeigt einen ersten Versorgungseingang 4 sowie einen zweiten Versorgungseingang 4' einer bevorzugten Ausführungsform eines Ladesystems 1, wobei das Ladesystem 1 hierbei zwischen dem ersten 4 und dem zweiten 4' Versorgungseingang umschaltbar ist. Jeder der Versorgungseingänge 4, 4' ist mittels einer Anschlussvorrichtung 7a bzw. 7b gebildet, wobei der Drehstromeingang 4 mittels eines Drehstrom-Anschlusses 7a mit drei Phasenleitern 4a und einem Nullleiter 4b zur Verbindung mit einem Drehstromnetz und der Wechselstromeingang 4' mittels eines Wechselstrom-Anschlusses 7b mit einem Phasenleiter 4a und einem Neutrallleiter 4b zur Verbindung mit einem Wechselstromnetz gebildet ist. Die Anschlussvorrichtungen 7a, 7b sind bevorzugt in ein gemeinsames Anschaltfeld 7c integriert, die Nullleiter 4b bevorzugt mit der Potentialleitung 5b zusammengeführt.

Zum Umschalten zwischen einer Drehstrom- und einer Wechselstromenergieversorgung ist ein dritter Schalter S6 zwischen die Phasenleitung 4a des Versorgungseingangs 4' und eine Verbindungsleitung 4a des Versorgungseingang 4 geschaltet, welcher dieselben selektiv elektrisch verbinden kann.

Falls eine externe Drehstromquelle für einen Ladebetrieb vorgesehen ist, wird der erste Versorgungseingang 4 des Ladesystems 1 mit derselben über die Anschlussvorrichtung 7a verbunden, wobei der dritte Schalter S6 geöffnet und der Wechselstromeingang 4' somit elektrisch von den Verbindungsleitungen 5a getrennt bzw. abgeschaltet ist. Ein Ladebetrieb erfolgt somit ausschließlich über den Drehstromeingang 4 mittels dreier aktiver Phasenleiter 4a des Drehstromeingangs 4.

Für einen Ladebetrieb mittels eines externen Wechselstromnetzes wird der zweite Versorgungseingang 4' via dessen Anschlussvorrichtung 7b mit dem Wechselstromnetz verbunden. Die ersten Schalter S3 und S4 sind funktionslos, z.B. geöffnet, die Schalter S5 und S6 geschlossen, i.e. leitend geschalten. Mit dieser Schaltstellung des ersten Schalters S5 und des dritten Schalters S6 kann die Phase des Wechselstromeingangs 4' elektrisch an eine Verbindungsleitung 5a, i.e. die des ersten Schalters S5 in Fig. 2, geschaltet werden. Ein Ladebetrieb erfolgt somit ausschließlich mittels des Wechselstromeingangs 4' über einen aktiven Phasenleiter 4a desselben.

Das Ladesystem 1 ermöglicht insofern sowohl im Wechsel- als auch im Drehstromnetz einen Ladebetrieb, insbesondere mit einfacher Umschaltmöglichkeit zwischen Wechsel- und Drehstromspeisung.

Derjenige Schalter der ersten Schalter S3, S4, S5, dessen Phasenleiter 4a mit dem Schalter S6 elektrisch verbunden ist, vorliegend S5, kann hierbei sowohl für den Wechselstrom- als auch den Drehstromladebetrieb auf vorstehend beschriebene Weise im Hoch- und/oder Tiefsetzstellerbetrieb arbeiten. Der Nullleiter 4b des Wechsel- und des Drehstromeinganges 4, 4' ist hierbei z.B. als gemeinsamer Nullleiter 4b ausgeführt.

### Bezugszeichen

- 1: Ladesystem
- 2: Energiespeicher
- 3: Wechselrichter
- 4: Versorgungseingang
- 4': weiterer Versorgungseingang
- 4a: Phasenleiter
- 4b: Nullleiter bzw. Neutrallleiter
- 5a: Verbindungsleiter
- 5b: Potentialleitung
- 6: Drehfeldmaschine
- 7a: Drehstrom-Anschlussvorrichtung
- 7b: Wechselstrom-Anschlussvorrichtung
- 7c: Anschaltfeld
- S1, S2: zweite Schalter
- S3, S4, S5: erste Schalter
- S6: dritter Schalter
- D1, D2, D3: Dioden
- A1, A2, A3: Abgriff

## Patentansprüche

1. Elektrisches Ladesystem (1) für einen Energiespeicher (2) eines Kraftfahrzeugs, wobei das Ladesystem (1) einen Versorgungseingang (4, 4') in einem Leitersystem mit wenigstens einem Phasen- (4a) und einem Nullleiter (4b) für die Energieversorgung aus einem Netz aufweist, wobei das Ladesystem (1) ferner eine Drehfeldmaschine (6) aufweist, welche über ihre Strangwicklungen (u, v, w) durch denselben betreibbar mit einem Wechselrichter (3) verbunden ist, wobei der Wechselrichter (3) andererseits zur Verbindung mit dem zu ladenden Energiespeicher (2) vorgesehen ist, wobei die Strangwicklungen (u, v, w) der Drehfeldmaschine (6) elektrisch selektiv vereinzel- und zusammenführbar sind, **dadurch gekennzeichnet, dass** das Ladesystem (1) zu einem Hochsetzsteller-Ladebetrieb und einem Tiefsetzsteller-Ladebetrieb mittels wenigstens einer vereinzelten Strangwicklung (u, v, w), insbesondere sämtlicher vereinzelter Strangwicklungen (u, v, w), ausgebildet ist.

2. Ladesystem nach Anspruch 1, **dadurch gekennzeichnet, dass** der wenigstens eine Phasenleiter (4a) des Versorgungseinganges (4, 4') über einen ersten Schalter (S3, S4, S5) sowie eine in Sperrrichtung geschaltete Diode (D1, D2, D3) mit dem Nullleiter (4b) des Versorgungseinganges (4, 4') verbunden ist, wobei eine elektrisch vereinzelte Strangwicklung (u, v, w) über einen Abgriff (A1, A2, A3) zwischen diesem ersten Schalter (S3, S4, S5) und dieser Diode (D1, D2, D3) mittels desselben ersten Schalters (S3, S4, S5) selektiv mit dem Phasenleiter (4a) des Versorgungseinganges (4, 4') verbindbar ist, und wobei der Wechselrichter (3) mit dem Nullleiter (4b) elektrisch verbunden ist.

3. Ladesystem (1) nach Anspruch 1 oder 2, **dadurch gekennzeichnet, dass** das Ladesystem (1) einen ersten Versorgungseingang (4) mit einer ersten Anzahl von Phasenleitern (4a), insbesondere drei Phasenleitern (4a), und einen zweiten Versorgungseingang (4') mit einer zweiten Anzahl von Phasenleitern (4a) aufweist, zwischen welchen zur Energieversorgung aus dem Netz selektiv umgeschaltet werden kann.

4. Ladesystem (1) nach Anspruch 3, **dadurch gekennzeichnet, dass** zu einem Umschalten zwischen dem ersten (4) und dem zweiten (4') Versorgungseingang wenigstens ein erster Schalter (S3, S4, S5) und/oder ein dritter Schalter (S6) vorgesehen ist.

5. Ladesystem (1) nach einem der vorhergehenden Ansprüche, **dadurch gekennzeichnet, dass** mehrere, insbesondere sämtliche Phasenleiter (4a) eines jeweiligen Versorgungseinganges (4, 4') über je einen ersten Schalter (S3, S4, S5) sowie je eine in Sperrrichtung geschaltete Diode (D1, D2, D3) mit dem Nullleiter (4b) des Versorgungseinganges (4, 4') verbindbar sind, wobei mehrere, insbesondere sämtliche elektrisch vereinzelte Strangwicklungen (u, v, w) über je einen Abgriff (A1, A2, A3) zwischen einem ersten Schalter (S3, S4, S5) und einer Diode (D1, D2, D3) mittels des jeweiligen selben Schalters (S3, S4, S5) selektiv mit je einem Phasenleiter (4a) verbindbar sind.

6. Ladesystem (1) nach einem der vorhergehenden Ansprüche, **dadurch gekennzeichnet, dass** ein Versorgungseingang (4, 4') ein Drehstromeingang (7b), insbesondere mit drei Phasenleitern (4a) und/oder ein Wechselstromeingang (7a) mit einem Phasenleiter (4a) ist.

7. Ladesystem (1) nach einem der vorhergehenden Ansprüche, **dadurch gekennzeichnet, dass** mittels wenigstens einer vereinzelten Strangwicklung (u, v, w) der Drehfeldmaschine (6), dem damit über den Abgriff (A1, A2, A3) verbundenen ersten Schalter (S3, S4, S5) sowie der damit über den Abgriff (A1, A2, A3) verbundenen Diode (D1, D2, D3) ein in Richtung zu einem Energiespeicher (2) wirkender Tiefsetzsteller gebildet ist.

8. Ladesystem (1) nach einem der vorhergehenden Ansprüche, **dadurch gekennzeichnet, dass** mittels wenigstens einer vereinzelten Strangwicklung (u, v, w) der Drehfeldmaschine (6), dem damit über den Abgriff (A1, A2, A3) verbundenen ersten Schalter (S3, S4, S5) und dem Wechselrichter (3) ein in Richtung zu einem Energiespeicher (2) wirkender Hochsetzsteller gebildet ist.

9. Ladesystem (1) nach einem der vorhergehenden Ansprüche, **dadurch gekennzeichnet, dass** die Wicklungsstränge (u, v, w) der Drehfeldmaschine (6) über zweite Schalter (S1, S2) vereinzel- und zusammenführbar sind.

10. Ladesystem (1) nach einem der vorhergehenden Ansprüche, **dadurch gekennzeichnet, dass** die Phasenleiter (4a) eines jeweiligen Versorgungseinganges (4, 4') je über einen Verbindungsleiter (5a) mit dem Nullleiter (4b) verbunden sind, wobei jeder Verbindungsleiter (5a) einen ersten Schalter (S3, S4, S5) und eine Diode (D1, D2, D3) aufweist, wobei je ein Abgriff (A1, A2, A3) für eine vereinzelte Strangwicklung (u, v, w) zwischen dem Schalter (S3, S4, S5) und der Diode (D1, D2, D3) gebildet ist.

11. Verfahren zum Betrieb eines Ladesystems (1) nach einem der vorhergehenden Ansprüche, **dadurch gekennzeichnet, dass** in einer ersten Tiefsetzstellerbetriebsart des Ladesystems (1), bei welchem das Ladesystem (1) in Richtung zu einem Energiespeicher (2) als Tiefsetzsteller wirkt, wenigstens ein erster, an einer aktiven Phasenleitung (4a) angeordneter Schalter (S3, S4, S5) getaktet betrieben wird, wobei die mit demselben Schalter (S3, S4, S5) über den zugehörigen Abgriff (A1, A2, A3) verbundene Strangwicklung (u, v, w) jeweils elektrisch vereinzelt ist und wobei der Wechselrichter (3) in einem, insbesondere ungesteuerten, Durchschleifbetrieb arbeitet.

12. Verfahren zum Betrieb eines Ladesystems (1) nach einem der vorhergehenden Ansprüche, **dadurch gekennzeichnet, dass** in einer zweiten Hochsetzstellerbetriebsart des Ladesystems (1), bei welchem das Ladesystem (1) in Richtung zu einem Energiespeicher (2) als Hochsetzsteller wirkt, wenigstens ein erster, an einer aktiven Phasenleitung (4a) angeordneter Schalter (S3, S4, S5) geschlossen ist, wobei die mit dem Schalter (S3, S4, S5) über den zugehörigen Abgriff (A1, A2, A3) verbundene Strangwicklung (u, v, w) jeweils elektrisch vereinzelt ist und wobei der Wechselrichter (3) getaktet betrieben wird.

13. Verfahren zum Betrieb eines Ladesystems (1) nach einem der vorhergehenden Ansprüche, **dadurch gekennzeichnet, dass** in einer dritten Ladebetriebsart des Ladesystems (1), bei welcher das Ladesystem (1) im Ladebetrieb arbeitet, wenigstens ein erster, an einer aktiven Phasenleitung (4a) angeordneter Schalter (S3, S4, S5) getaktet betrieben wird, wobei die mit dem Schalter (S3, S4, S5) über den zugehörigen Abgriff (A1, A2, A3) verbundene Strangwicklung (u, v, w) jeweils elektrisch vereinzelt ist und der Wechselrichter (3) getaktet betrieben wird.

14. Verfahren nach Anspruch 13, **dadurch gekennzeichnet, dass** wenigstens ein erster Schalter (S3, S4, S5), insbesondere sämtliche ersten Schalter (S3, S4, S5) mit einer Frequenz getaktet werden, welche der Frequenz der Taktung des Wechselrichters (3) entspricht.

15. Kraftfahrzeug, **gekennzeichnet durch** ein Ladesystem (1) nach einem der Ansprüche 1 bis 10.
